# EUROPEAN PATENT APPLICATION

(11) **EP 4 664 822 A1**
(43) Date of publication of application: **17.12.2025**
(21) Application number: 23920545.3
(22) Date of filing: 10.02.2023
(51) Int. Cl.: H04L 9/40, H04W 12/0433

(54) **METHOD FOR DETERMINING OR ASSISTING IN DETERMINING KEY, APPARATUS, DEVICE AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Stöckeler, Ferdinand
(86) International application number: PCT/CN2023/075530
(87) International publication number: WO 2024/164338

(57) **Abstract**

Provided in the present disclosure are a method for determining or assisting in determining a key, an apparatus, a device and a readable storage medium, which are applied to the technical field of wireless communications. The method executed by a first entity for determining a key comprises: receiving a first message sent by a user equipment, the first message comprising first key identifier information; determining a first key according to the first key identifier information, the first key being acquired from a second entity according to the first key identifier information, and the first key being a key corresponding to the first key identifier information; and, on the basis of the first key, determining a master key related to OSCORE.

## Description

### TECHNICAL FIELD

The disclosure relates to the field of wireless communication technologies, and in particular relates to a method for determining or assisting in determining a key, an apparatus, a device, and a readable storage medium.

### BACKGROUND

The object security for constrained RESTful environments (OSCORE) protocol is expected to be used to establish security between a user equipment (UE) and a network device. However, the OSCORE protocol lacks an effective key management mechanism, and how to establish a secure connection based on OSCORE in authentication and key management for applications (AKMA) and generic bootstrapping architecture (GBA) scenarios remains an unsolved problem.

### SUMMARY

The disclosure provide a method for determining or assisting in determining a key, an apparatus, a device, and a readable storage medium.

According to a first aspect of embodiments of the disclosure, a method for determining a key is provided, which is performed by a first entity. The method includes:
receiving a first message sent by a UE, in which the first message includes first key identifier (ID) information;
determining a first key according to the first key ID information, in which the first key is obtained from a second entity according to the first key ID information, and the first key is a key corresponding to the first key ID information; and
determining an OSCORE-related master secret based on the first key.

In some embodiments, the first message is an OSCORE message.

In some embodiments, the first key ID information in the first message is transmitted via an OSCORE protocol parameter, and the OSCORE protocol parameter includes at least one of:
a key ID (KID) context, a KID, or an ID context.

In some embodiments, the method further includes:
receiving a second message sent by the UE, in which the second message includes at least one piece of second key ID information;
selecting the first key ID information from the at least one piece of second key ID information; and
sending the first key ID information to the UE.

In some embodiments, the method further includes:
obtaining the first key from the second entity according to the first key ID information.

In some embodiments, the second key ID information is key ID information determined by the UE according to a first interface of the UE and conforming to a first protocol corresponding to the first interface.

In some embodiments, the first key ID information is key ID information determined by the first entity according to a second interface of the first entity and conforming to a second protocol corresponding to the second interface.

In some embodiments, the first key ID information is GBA-related key ID information or AKMA-related key ID information.

In some embodiments, the second key ID information includes at least one of: at least one piece of GBA-related key ID information, or at least one piece of AKMA-related key ID information.

In some embodiments, the GBA-related key ID information includes at least one of: 3rd generation partnership project (3GPP)-bootstrapping, 3GPP-GBA, 3GPP-bootstrapping-universal integrated circuit card (UICC), 3GPP-GBA-UICC, 3GPP-bootstrapping-digest, 3GPP-GBA-digest, or a bootstrapping-transaction ID (B-TID); and/or
the AKMA-related key ID information includes at least one of: 3GPP-AKMA, or an application-KID (A-KID).

In some embodiments, the first message includes a token, and the token includes the first key ID information.

In some embodiments, the token is generated by an authorization server according to the first key ID information.

In some embodiments, the first key ID information is key ID information determined by the UE according to a first interface of the UE and conforming to a first protocol corresponding to the first interface.

According to a second aspect of embodiments of the disclosure, a method for determining a key is provided, which is performed by a UE. The method includes:
sending a first message to a first entity, in which the first message includes first key ID information configured for the first entity to determine a first key according to the first key ID information and to determine an OSCORE-related master secret based on the first key, and in which the first key is obtained from a second entity according to the first key ID information, and the first key is a key corresponding to the first key ID information.

In some embodiments, the first message is an OSCORE message.

In some embodiments, the first key ID information in the first message is transmitted via an OSCORE protocol parameter, and the OSCORE protocol parameter includes at least one of:
a KID context, a KID, or an ID context.

In some embodiments, the method further includes:
determining, according to a first interface of the UE, a first protocol corresponding to the first interface; and
determining, according to the first protocol, the first key ID information conforming to the first protocol.

In some embodiments, the method further includes:
sending a second message to the first entity, in which the second message includes at least one piece of second key ID information; and
receiving the first key ID information sent by the first entity.

In some embodiments, the second key ID information is key ID information determined by the UE according to a first interface of the UE and conforming to a first protocol corresponding to the first interface.

In some embodiments, the first key ID information is key ID information determined by the first entity according to a second interface of the first entity and conforming to a second protocol corresponding to the second interface.

In some embodiments, the first key ID information is GBA-related key ID information or AKMA-related key ID information.

In some embodiments, the second key ID information includes at least one of: at least one piece of GBA-related key ID information, or at least one piece of AKMA-related key ID information.

In some embodiments, the GBA-related key ID information includes at least one of: 3GPP-bootstrapping, 3GPP-GBA, 3GPP-bootstrapping-UICC, 3GPP-GBA-UICC, 3GPP-bootstrapping-digest, 3GPP-GBA-digest, or a B-TID; and/or
the AKMA-related key ID information includes at least one of: 3GPP-AKMA, or an A-KID.

In some embodiments, the method further includes:
sending the first key ID information to an authorization server; and
receiving a token sent by the authorization server, in which the token includes the first key ID information.

In some embodiments, the first message includes the token, and the token includes the first key ID information.

In some embodiments, the method further includes:
determining, according to a first interface of the UE, a first protocol corresponding to the first interface; and
determining, according to the first protocol, the first key ID information conforming to the first protocol.

According to a third aspect of embodiments of the disclosure, an apparatus for determining a key is provided, which includes:
a transceiver module, configured to receive a first message send by a UE, in which the first message includes first key ID information; and to determine a first key according to the first key ID information, in which the first key is obtained from a second entity according to the first key ID information, and the first key is a key corresponding to the first key ID information;
   and
a processing module, configured to determine an OSCORE-related master based on the first key.

According to a fourth aspect of embodiments of the disclosure, an apparatus for determining a key is provided, which includes:
a transceiver module, configured to send a first message to a first entity, in which the first message includes first key ID information configured for the first entity to determine a first key according to the first key ID information and to determine an OSCORE-related master key based on the first key, and in which the first key is obtained from a second entity according to the first key ID information, and the first key is a key corresponding to the first key ID information.

According to a fifth aspect of embodiments of the disclosure, an electronic device is provided and includes a processor and a memory, in which
a memory is configured to store a computer program; and
a processor is configured to execute the computer program to implement the method according to the first aspect or any possible design of the first aspect.

According to a sixth aspect of embodiments of the disclosure, an electronic device is provided and includes a processor and a memory, in which
a memory is configured to store a computer program; and
a processor is configured to execute the computer program to implement the method according to the second aspect or any possible design of the second aspect.

According to a seventh aspect of embodiments of the disclosure, a computer-readable storage medium is provided, which stores instructions that, when invoked and executed on a computer, cause the computer to implement the method according to the first aspect or any possible design of the first aspect.

According to an eighth aspect of embodiments of the disclosure, a computer-readable storage medium is provided, which stores instructions that, when invoked and executed on a computer, cause the computer to implement the method according to the second aspect or any possible design of the second aspect.

### BRIEF DESCRIPTION OF THE DRAWINGS

The drawings described herein are provided to facilitate a further understanding of embodiments of the disclosure and form a part of the disclosure. The schematic embodiments of the disclosure and their descriptions are used to explain the embodiments of the disclosure, and do not constitute an improper limitation on the embodiments of the disclosure.

The drawings herein are incorporated into and form a part of the specification, illustrate embodiments consistent with the embodiments of the disclosure, and together with the specification, serve to explain the principles of the embodiments of the disclosure.
FIG. 1 is an architecture schematic diagram of a wireless communication system according to an embodiment of the disclosure.
FIG. 2 is an interaction diagram of a method for determining a key according to an embodiment of the disclosure.
FIG. 3 is an interaction diagram of a method for determining a key according to another embodiment of the disclosure.
FIG. 4 is an interaction diagram of a method for determining a key according to another embodiment of the disclosure.
FIG. 5 is an interaction diagram of a method for determining a key according to another embodiment of the disclosure.
FIG. 6 is an interaction diagram of a method for determining a key according to another embodiment of the disclosure.
FIG. 7 is an architecture schematic diagram of a wireless communication system according to another embodiment of the disclosure.
FIG. 8 is an interaction diagram of a method for determining a key according to an embodiment of the disclosure.
FIG. 9 is an interaction diagram of a method for determining a key according to another embodiment of the disclosure.
FIG. 10 is a flowchart of a method for determining a key according to an embodiment of the disclosure.
FIG. 11 is a flowchart of a method for determining a key according to another embodiment of the disclosure.
FIG. 12 is a flowchart of a method for determining a key according to an embodiment of the disclosure.
FIG. 13 is a flowchart of a method for determining a key according to another embodiment of the disclosure.
FIG. 14 is a flowchart of a method for determining a key according to another embodiment of the disclosure.
FIG. 15 is a flowchart of a method for determining a key according to another embodiment of the disclosure.
FIG. 16 is a flowchart of a method for determining a key according to another embodiment of the disclosure.
FIG. 17 is a schematic diagram of an apparatus for determining a key according to an embodiment of the disclosure.
FIG. 18 is a schematic diagram of an electronic device according to an embodiment of the disclosure.
FIG. 19 is a schematic diagram of an apparatus for determining a key according to an embodiment of the disclosure.
FIG. 20 is a schematic diagram of an electronic device according to an embodiment of the disclosure.

### DETAILED DESCRIPTION

Embodiments of the disclosure will be further described below with reference to the drawings and specific implementations.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

Embodiments of the disclosure are described in detail below, and examples of the embodiments are shown in the drawings, in which the same or similar reference numerals represent the same or similar elements throughout. Embodiments described below with reference to the drawings are exemplary and are intended to explain the disclosure, but should not be construed as a limitation to the disclosure.

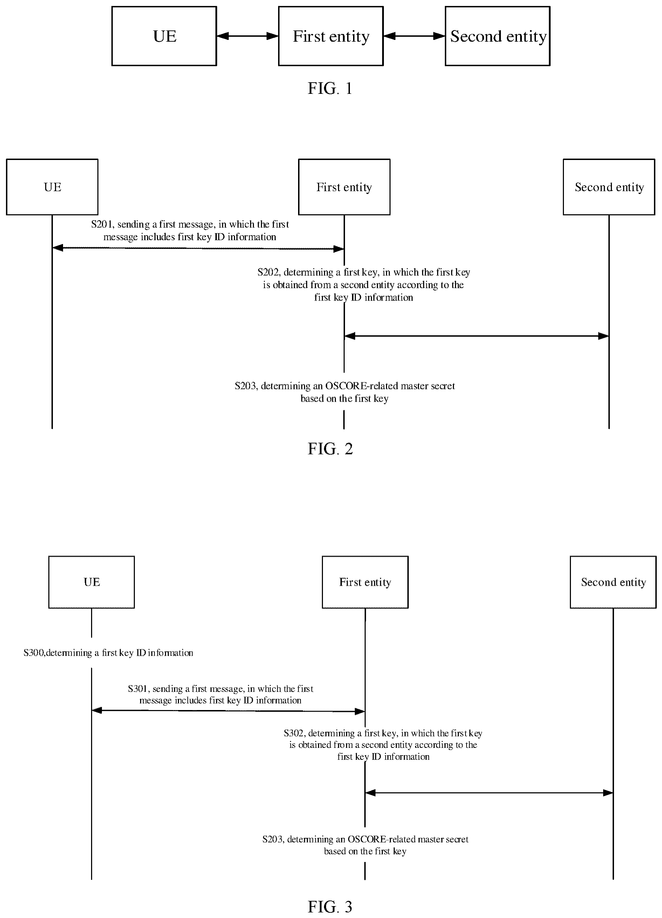

Embodiments of the disclosure may be applied to a wireless communication system as shown in FIG. 1, in which the wireless communication system may include a UE, a first entity, and a second entity.

The UE may also be a client or a terminal.

For example, the first entity may be a resource server (RS) or an application function (AF).

For example, the second entity may be a core network device, such as an Akma anchor function (AANF) and a bootstrapping server function (BSF).

The GBA protocol and the AKMA protocol based on 3GPP credentials may allow the UE and the AF of the first entity to share a common key, in which the common key is used in a process of establishing an application session.

The Internet of things (IoT)-friendly protocol for GBA and AKMA scenarios may be implemented based on the OSCORE protocol in the Internet engineering task force (IETF).

It should be noted that the devices in the wireless communication system shown in FIG. 1 are merely examples, and the wireless communication system may also include other network devices, such as access network devices. Embodiments of the disclosure do not limit this.

An embodiment of the disclosure provides a method for determining a key. FIG. 2 is an interaction diagram of a method for determining a key according to an example embodiment of the disclosure. As shown in FIG. 2, the method includes S201-S203.

At S201, a UE sends a first message to a first entity, in which the first message includes first key ID information.

In an example, the first entity is an RS.

In some examples, the first message is an OSCORE message.

In some examples, the first key ID information in the first message is transmitted via an OSCORE protocol parameter, and the OSCORE protocol parameter includes at least one of:
a KID context, a KID, or an ID context.

In some embodiments, the first key ID information is GBA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In some embodiments, the first key ID information is AKMA-related key ID information.

In an example, the AKMA-related key ID information is at least one of: 3GPP-AKMA, or an A-KID.

At S202, the first entity determines a first key according to the first key ID information, in which the first key is obtained from a second entity according to the first key ID information; and the first key is a key corresponding to the first key ID information.

At S203, the first entity determines an OSCORE-related master secret based on the first key.

Embodiments of the disclosure construct a method for determining or assisting in determining a key for OSCORE scenarios. The first entity may determine the first key according to the first key ID information sent by the UE. The first key is obtained from the second entity according to the first key ID information, so as to use the first key as the OSCORE master secret, which improves a security of the OSCORE protocol and expands application scenarios of OSCORE. Meanwhile, when the first entity obtains the first key according to the first key ID information sent by the UE, the first entity may use ID information of the UE authenticated by the second entity, making the obtaining process of the first key more secure.

An embodiment of the disclosure provides a method for determining a key, where the method includes the following steps.

At S300, a UE determines, according to a first interface of the UE, a first protocol corresponding to the first interface, and determines, according to the first protocol, a first key ID information conforming to the first protocol.

In an example, S301-S303 may also be performed after S300.

The contents of S301-S303 are the same as those of S201-S203, see S201-S203 and details will not be repeated here.

According to the method for determining a key provided by the embodiments of the disclosure, according to the first protocol corresponding to the first interface of the UE, the UE may determine, according to the first protocol, the first key ID information conforming to the first protocol, and provide the first key ID information to the first entity. When the first entity obtains the first key according to the first key ID information sent by the UE, the first entity may use ID information of the UE authenticated by the second entity, making the obtaining process of the first key more secure.

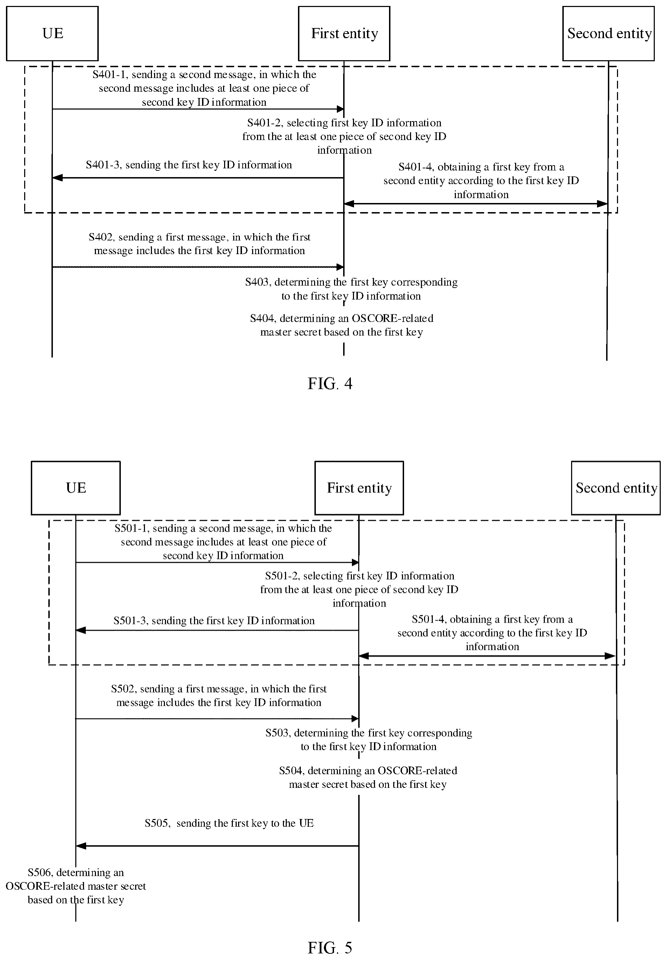

An embodiment of the disclosure provides a method for determining a key. FIG. 4 is an interaction diagram of a method for determining a key according to an example embodiment. As shown in FIG. 4, the method includes the following steps.

At S401, a negotiation process between a UE and a first entity is performed.

In an example, the negotiation process includes the following steps.

At S401-1, the UE sends a second message to the first entity, in which the second message includes at least one piece of second key ID information.

In some embodiments, the second key ID information includes at least one of: at least one piece of GBA-related key ID information, or at least one piece of AKMA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In an example, the AKMA-related key ID information is at least one of: 3GPP-AKMA, or an A-KID.

In some embodiments, the second key ID information is key ID information determined by the UE according to a first interface of the UE and conforming to a first protocol corresponding to the first interface.

In an example, in a case where the UE determines that the first protocol supported by the first interface of the UE only includes the GBA protocol, the UE selects at least one piece of second key ID information from the GBA-related key ID information and sends the at least one piece of second key ID information to the first entity via the second message.

In an example, in a case where the UE determines that the first protocol supported by the first interface of the UE only includes the AKMA protocol, the UE selects at least one piece of second key ID information from the AKMA-related key ID information and sends the at least one piece of second key ID information to the first entity via the second message.

In an example, in a case where the UE determines that the first protocol supported by the first interface of the UE includes both the GBA protocol and the AKMA protocol, the UE may select at least one piece of second key ID information from the GBA-related key ID information and/or the AKMA-related key ID information and send the at least one piece of second key ID information to the first entity via the second message.

At S401-2, the first entity selects first key ID information from the at least one piece of second key ID information.

In some embodiments, the first key ID information is key ID information determined by the first entity according to a second interface of the first entity and conforming to a second protocol corresponding to the second interface.

In an example, when the first entity receives the at least one piece of second key ID information sent by the UE, the first entity determines whether the second key ID information is the GBA-related key ID information or the AKMA-related key ID information, or includes both of the GBA-related key ID information and the AKMA-related key ID information. The first entity selects one from the at least one piece of second key ID information as the first key ID information according to the second protocol supported by its own second interface.

In an example, in a case where the second protocol supported by the second interface of the first entity does not match the first protocol corresponding to the at least one piece of second key ID information sent by the UE, the negotiation process fails.

At S401-3, the first entity sends the first key ID information to the UE.

In some embodiments, the first entity sends indication information to the UE, in which the indication information includes the first key ID information.

At S401-4, the first entity obtains a first key from a second entity according to the first key ID information, and the first key is a key corresponding to the first key ID information.

In an example, the second entity is a core network device.

In some embodiments, S401-4 further includes: recording a mapping relationship, in which the mapping relationship is a corresponding relationship between the first key ID information and the first key.

In some embodiments, the execution order of S401-3 and S401-4 may be swapped.

In some embodiments, the order of the steps in S401 may be arbitrarily combined on the basis of a reasonable procedure.

At S402, the UE sends a first message to the first entity, in which the first message includes the first key ID information.

In some embodiments, the first message is an OSCORE message.

In some embodiments, the first key ID information in the first message is transmitted via an OSCORE protocol parameter, in which the OSCORE protocol parameter includes at least one of:
a KID context, a KID, or an ID context.

In some embodiments, the first key ID information is GBA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID. In some embodiments, the first key ID information is AKMA-related key ID information.

In an example, the AKMA-related key ID information is at least one of: 3GPP-AKMA, or an A-KID.

At S403, the first entity determines the first key corresponding to the first key ID information.

In some embodiments, the first key corresponding to the first key ID information is determined according to the mapping relationship.

At S404, the first entity determines an OSCORE-related master secret based on the first key.

According to the method for determining a key provided by the embodiments of the disclosure, the UE may send corresponding second key ID information to the first entity according to the first protocol supported by its own interface, such as at least one of the GBA protocol or the AKMA protocol. The first entity selects one from the received second key ID information as the first key ID information, which enables the first entity to have more options to obtain key ID information of the first key, thus improving the possibility of successfully determining the OSCORE-related master secret.

An embodiment of the disclosure provides a method for determining a key. FIG. 5 is an interaction diagram of a method for determining a key according to an example embodiment. As shown in FIG. 5, the method includes the following steps.

At S501, a negotiation process between a UE and a first entity is performed.

The negotiation process includes the following steps.

At S501-1: the UE sends a second message to the first entity, in which the second message includes at least one piece of second key ID information.

In some embodiments, the second key ID information includes at least one of: at least one piece of GBA-related key ID information, or at least one piece of AKMA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In an example, the AKMA-related key ID information is at least one of: 3GPP-AKMA, or an A-KID.

In some embodiments, the second key ID information is key ID information determined by the UE according to a first interface of the UE and conforming to a first protocol corresponding to the first interface.

In an example, in a case where the UE determines that the first protocol supported by the first interface of the UE only includes the GBA protocol, the UE selects at least one piece of second key ID information from the GBA-related key ID information and sends the at least one piece of second key ID information to the first entity via the second message.

In an example, in a case where the UE determines that the first protocol supported by the first interface of the UE only includes the AKMA protocol, the UE selects at least one piece of second key ID information from the AKMA-related key ID information and sends the at least one piece of second key ID information to the first entity via the second message.

In an example, in a case where the UE determines that the first protocol supported by the first interface of the UE includes both the GBA protocol and the AKMA protocol, the UE may select at least one piece of second key ID information from the GBA-related key ID information and/or the AKMA-related key ID information and send the at least one piece of second key ID information to the first entity via the second message.

At S501-2, the first entity selects first key ID information from the at least one piece of second key ID information.

In some embodiments, the first key ID information is key ID information determined by the first entity according to a second interface of the first entity and conforming to a second protocol corresponding to the second interface.

In an example, when the first entity receives the at least one piece of second key ID information sent by the UE, the first entity determines whether the second key ID information is the GBA-related key ID information or the AKMA-related key ID information, or includes both of the GBA-related key ID information and the AKMA-related key ID information. The first entity selects one from the at least one piece of second key ID information as the first key ID information according to the second protocol supported by its own second interface.

In an example, in a case where the second protocol supported by the second interface of the first entity does not match the first protocol corresponding to the at least one piece of second key ID information sent by the UE, the negotiation process fails.

At S501-3, the first entity sends the first key ID information to the UE.

In some embodiments, the first entity sends indication information to the UE, in which the indication information includes the first key ID information.

At S501-4, the first entity obtains a first key from a second entity according to the first key ID information, and the first key is a key corresponding to the first key ID information.

In some embodiments, S501-4 further includes: recording a mapping relationship, in which the mapping relationship is a corresponding relationship between the first key ID information and the first key.

In some embodiments, the execution order of S501-3 and S501-4 may be swapped.

In some embodiments, the order of the steps in S501 may be arbitrarily combined on the basis of reasonable procedures.

At S502, the UE sends a first message to the first entity, in which the first message includes the first key ID information.

In some embodiments, the first message is an OSCORE message.

In some embodiments, the first key ID information in the first message is transmitted via an OSCORE protocol parameter, in which the OSCORE protocol parameter includes at least one of:
a KID context, a KID, or an ID context.

In some embodiments, the first key ID information is GBA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In some embodiments, the first key ID information is AKMA-related key ID information.

In an example, the AKMA-related key ID information is at least one of: 3GPP-AKMA, or an A-KID.

At S503, the first entity determines the first key corresponding to the first key ID information.

In some embodiments, the first key corresponding to the first key ID information is determined according to the mapping relationship.

At S504, the first entity determines an OSCORE-related master secret based on the first key.

At S505, the first entity sends the first key to the UE.

In some embodiments, the execution order of S504 and S505 may be swapped.

At S506, the UE determines an OSCORE-related master secret based on the first key.

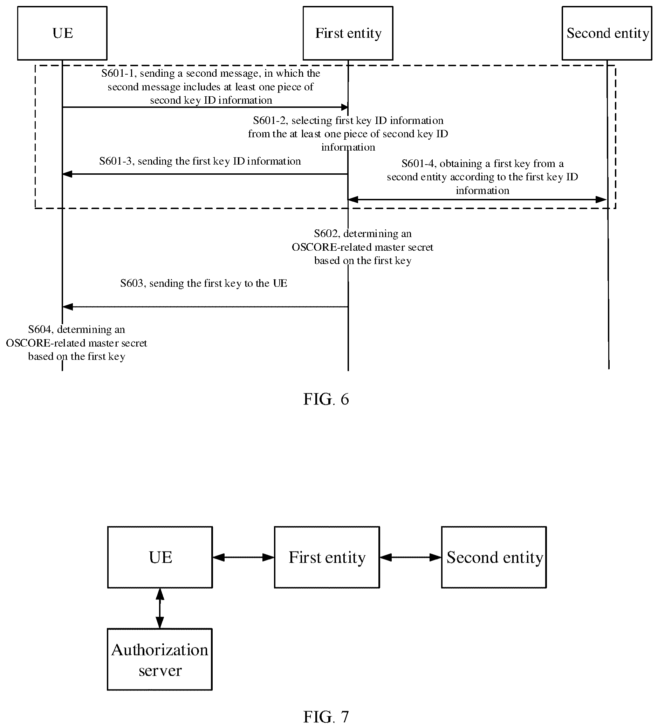

An embodiment of the disclosure provides a method for determining a key. FIG. 6 is an interaction diagram of a method for determining a key according to an example embodiment. As shown in FIG. 6, the method includes the following steps.

At S601, a negotiation process between a UE and a first entity is performed. The content of the negotiation process S601 is the same as that of S401, see S401 and details will not be repeated here.

At S602, the first entity determines an OSCORE-related master secret based on the first key.

At S603, the first entity sends the first key to the UE.

In some embodiments, the execution order of S602 and S603 may be swapped.

At S604, the UE determines an OSCORE-related master secret based on the first key.

Embodiments of the disclosure may be applied to a wireless communication system as shown in FIG. 7, and the wireless communication system may include a UE, a first entity, a second entity, and an authorization server.

The UE may also be a client or a terminal.

For example, the first entity may be an RS or an AF).

For example, the second entity may be a core network device of a 5G network, such as an AANF and a BSF.

The authorization server is configured to generate a tokens.

It should be noted that the devices in the wireless communication system shown in FIG. 7 are merely examples, and the wireless communication system may also include other network devices, such as access network devices. Embodiments of the disclosure do not limit this.

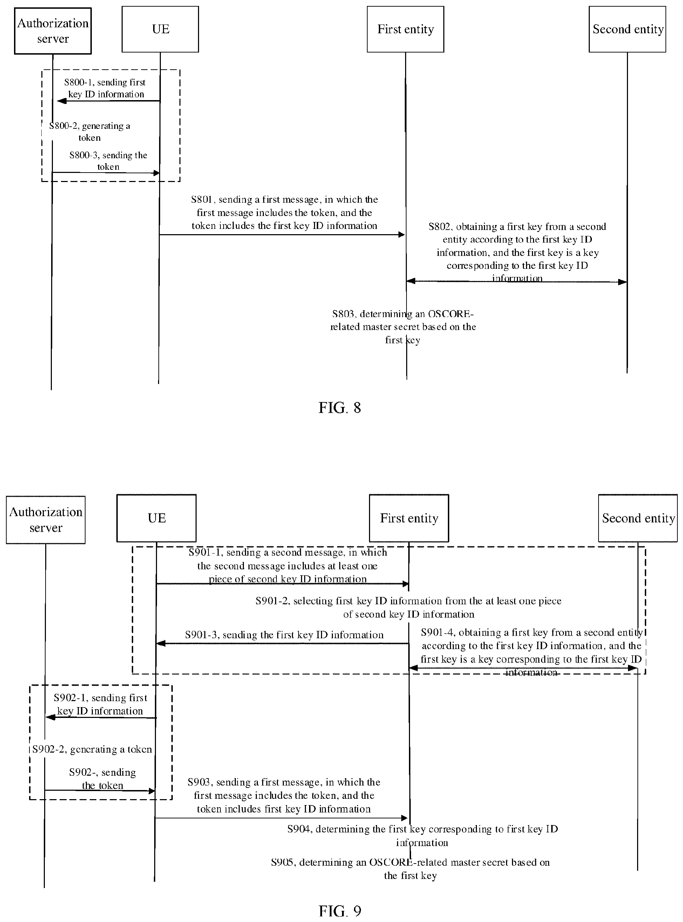

An embodiment of the disclosure provides a method for determining a key. FIG. 8 is an interaction diagram of a method for determining a key according to an example embodiment. As shown in FIG. 8, the method includes the following steps.

At S800, an authentication process is performed.

The authentication process includes the following steps.

At S800-1, a UE sends first key ID information to an authorization server.

At S800-2, the authorization server generates a token according to the first key ID information, in which the token includes the first key ID information.

At S800-3, the authorization server sends the token to the UE.

At S801, the UE sends a first message to the first entity, in which the first message includes the token, and the token includes the first key ID information.

In an example, the first entity is an RS.

At S802, the first entity obtains a first key from a second entity according to the first key ID information, and the first key is a key corresponding to the first key ID information.

In an example, the second entity is a core network device.

At S803, the first entity determines an OSCORE-related master secret based on the first key.

According to the method for determining a key provided by the embodiments of the disclosure, the UE obtains the token including the first key ID information which is generated via the authorization server. The UE sends the first message to the first entity based on the token, which may further improve the security in the process of determining the OSCORE-related master secret.

An embodiment of the disclosure provides a method for determining a key. FIG. 9 is an interaction diagram of a method for determining a key according to an example embodiment. As shown in FIG. 9, the method includes S901-S905.

At S901, a negotiation process between a UE and a first entity is performed.

The negotiation process includes the following steps.

At S901-1, the UE sends a second message to the first entity, in which the second message includes at least one piece of second key ID information.

In some embodiments, the second key ID information includes at least one of: at least one piece of GBA-related key ID information, or at least one piece of AKMA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In an example, the AKMA-related key ID information is at least one of: 3GPP-AKMA, or an A-KID.

In some embodiments, the second key ID information is key ID information determined by the UE according to a first interface of the UE and conforming to a first protocol corresponding to the first interface.

In an example, in a case where the UE determines that the first protocol supported by the first interface of the UE only includes the GBA protocol, the UE selects at least one piece of second key ID information from the GBA-related key ID information and sends the at least one piece of second key ID information to the first entity via the second message.

In an example, in a case where the UE determines that the first protocol supported by the first interface of the UE only includes the AKMA protocol, the UE selects at least one piece of second key ID information from the AKMA-related key ID information and sends the at least one piece of second key ID information to the first entity via the second message.

In an example, in a case where the UE determines that the first protocol supported by the first interface of the UE includes both the GBA protocol and the AKMA protocol, the UE may select at least one piece of second key ID information from the GBA-related key ID information and/or the AKMA-related key ID information and send the at least one piece of second key ID information to the first entity via the second message. At S901-2, the first entity selects first key ID information from the at least one piece of second key ID information.

In some embodiments, the first key ID information is key ID information determined by the first entity according to a second interface of the first entity and conforming to a second protocol corresponding to the second interface.

In an example, when the first entity receives the at least one piece of second key ID information sent by the UE, the first entity determines whether the second key ID information is the GBA-related key ID information or the AKMA-related key ID information, or includes both of the GBA-related key ID information and the AKMA-related key ID information. The first entity selects one from the at least one piece of second key ID information as the first key ID information according to the second protocol supported by its own second interface.

In an example, in a case where the second protocol supported by the second interface of the first entity does not match the first protocol corresponding to the at least one piece of second key ID information sent by the UE, the negotiation process fails.

At S901-3, the first entity sends the first key ID information to the UE.

In some embodiments, the first entity sends indication information to the UE, in which the indication information includes the first key ID information.

At S901-4, the first entity obtains a first key from a second entity according to the first key ID information, and the first key is a key corresponding to the first key ID information.

In some embodiments, S901-4 further includes: recording a mapping relationship, in which the mapping relationship is a corresponding relationship between the first key ID information and the first key.

In some embodiments, the execution order of S901-3 and S901-4 may be swapped.

In some embodiments, the order of the steps in S901 may be arbitrarily combined on the basis of reasonable procedures.

At S902, an authentication process is performed.

The authentication process in S902 is the same as the authentication process in S800, see S800 and details will not be repeated here.

At S903, the UE sends a first message to the first entity, in which the first message includes the token, and the token includes first key ID information. At S904, the first entity determines the first key.

In some possible implementation manners, the first entity determines a key corresponding to the first key ID information as the first key.

At S905, the first entity determines an OSCORE-related master secret based on the first key.

According to the method for determining a key provided by the embodiments of the disclosure, the first entity receives the at least one piece of second key ID information determined by the UE according to the first protocol supported by the UE's own interface. The first entity selects, according to the second protocol supported by the first entity's own interface, one from the received second key ID information as the first key ID information, which enables the first entity to have more options to obtain key ID information of the first key, thus improving the probability of successful negotiation. Meanwhile, when the first entity obtains the first key according to the first key ID information sent by the UE, it is able to utilize ID information of the UE authenticated by the second entity, making the obtaining process of the first key more secure.

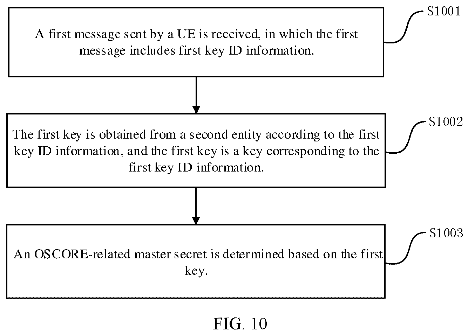

An embodiment of the disclosure provides a method for determining a key, which is executed by a first entity. FIG. 10 is a flowchart of a method for determining a key according to an example embodiment. As shown in FIG. 10, the method includes S1001-S1003.

At S1001, a first message sent by a UE is received, in which the first message includes first key ID information.

In some embodiments, the first message is an OSCORE message.

In some embodiments, the first key ID information in the first message is transmitted via an OSCORE protocol parameter, and the OSCORE protocol parameter included at least one of:
a KID context, a KID, or an ID context.

In some embodiments, the first key ID information is GBA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In some embodiments, the first key ID information is AKMA-related key ID information.

In an example, the AKMA-related key ID information is at least one of: 3GPP-AKMA, or an A-KID.

In some embodiments, the first key ID information is key ID information determined by the UE according to a first interface of the UE and conforming to a first protocol corresponding to the first interface.

At S1002, the first key is obtained from a second entity according to the first key ID information, and the first key is a key corresponding to the first key ID information.

At S1003, the first entity determines an OSCORE-related master secret based on the first key.

In some possible implementation manners, the first key ID information is determined according to the first protocol supported by the first interface of the UE. The first entity determines the corresponding first key according to the first key ID information. In a case where the first key is included in the first entity, the first key is determined as the OSCORE-related master secret. In a case where the first key is not included in the first entity, the first key is obtained from the second entity, and the first key is determined as the OSCORE-related master secret.

Embodiments of the disclosure construct the method for determining a key for AKMA and GBA scenarios. The first entity may determine the first key according to the first key ID information sent by the UE, and the first key is obtained from the second entity according to the first key ID information, so as to use the first key as the OSCORE master secret, which improves the security of the OSCORE protocol and expands the application scenarios of OSCORE.

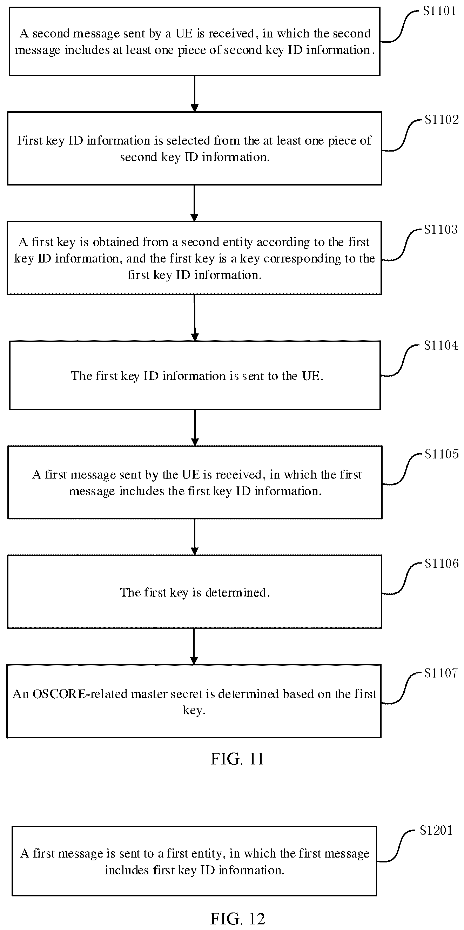

An embodiment of the disclosure provides a method for determining a key, which is executed by a first entity. FIG. 11 is a flowchart of a method for determining a key according to an example embodiment. As shown in FIG. 11, the method includes S1101-S1107.

At S1101, a second message sent by a UE is received, in which the second message includes at least one piece of second key ID information.

In some embodiments, the second key ID information includes at least one of: at least one piece of GBA-related key ID information, or at least one piece of AKMA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In an example, the AKMA-related key ID information is at least one of: 3GPP-AKMA, or an A-KID.

In some embodiments, the second key ID information is key ID information determined by the UE according to a first interface of the UE and conforming to a first protocol corresponding to the first interface.

In an example, in a case where the UE determines that the first protocol supported by the first interface of the UE only includes the GBA protocol, the UE selects at least one piece of second key ID information from the GBA-related key ID information and sends the at least one piece of second key ID information to the first entity via the second message.

In an example, in a case where the UE determines that the first protocol supported by the first interface of the UE only includes the AKMA protocol, the UE selects at least one piece of second key ID information from the AKMA-related key ID information and sends the at least one piece of second key ID information to the first entity via the second message.

In an example, in a case where the UE determines that the first protocol supported by the first interface of the UE includes both the GBA protocol and the AKMA protocol, the UE may select at least one piece of second key ID information from the GBA-related key ID information and/or the AKMA-related key ID information and send the at least one piece of second key ID information to the first entity via the second message.

At S1102, first key ID information is selected from the at least one piece of second key ID information.

In some embodiments, the first key ID information is key ID information determined by the first entity according to a second interface of the first entity and conforming to a second protocol corresponding to the second interface.

In an example, when the first entity receives the at least one piece of second key ID information sent by the UE, the first entity determines a type of the second key ID information, whether the second key ID information is the GBA-related key ID information or the AKMA-related key ID information, or includes both of the GBA-related key ID information and the AKMA-related key ID information. The first entity selects one from the at least one piece of second key ID information as the first key ID information according to the second protocol supported by its own second interface.

In an example, in a case where the second protocol supported by the second interface of the first entity does not match the first protocol corresponding to the at least one piece of second key ID information sent by the UE, the negotiation process fails.

A S1103, a first key is obtained from a second entity according to the first key ID information, and the first key is a key corresponding to the first key ID information.

In some embodiments, S1004 further includes: recording a mapping relationship, in which the mapping relationship is a corresponding relationship between the first key ID information and the first key.

At S1104, the first key ID information is sent to the UE.

In some embodiments, indication information is sent to the UE, in which the indication information includes the first key ID information.

In some embodiments, the execution order of S1103 and S 1104 may be swapped.

In some embodiments, the order of the steps in S1101 to S1104 may be combined arbitrarily on the basis of a reasonable procedure.

At S1105, a first message sent by the UE is received, in which the first message includes the first key ID information.

In some embodiments, the first message is an OSCORE message.

In some embodiments, the first key ID information in the first message is transmitted via an OSCORE protocol parameter, in which the OSCORE protocol parameter includes at least one of:
a KID context, a KID, or an ID context.

In some embodiments, the first key ID information is GBA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID. In some embodiments, the first key ID information is AKMA-related key ID information.

In an example, the AKMA-related key ID information is at least one of: 3GPP-AKMA, or an A-KID.

At S1106, the first key is determined.

In some embodiments, the first key corresponding to the first key ID information is determined according to the mapping relationship.

At S1107, the first entity determines an OSCORE-related master secret based on the first key.

According to the method for determining a key provided by the embodiments of the disclosure, the first entity receives the at least one piece of second key ID information determined by the UE according to the first protocol supported by the UE's own interface. The first entity selects, according to the second protocol supported by the first entity's own interface, one from the received second key ID information as the first key ID information, which enables the first entity to have more options to obtain key ID information of the first key, thus improving the probability of successful negotiation. Meanwhile, when the first entity obtains the first key according to the first key ID information sent by the UE, it is able to utilize ID information of the UE authenticated by the second entity, making the obtaining process of the first key more secure.

An embodiment of the disclosure provides a method for determining a key, which is executed by a UE. FIG. 12 is a flowchart of a method for determining a key according to an example embodiment. As shown in FIG. 12, the method includes S1201.

At S1201, a first message is sent to a first entity, in which the first message includes first key ID information.

In some embodiments, the first message is an OSCORE message.

In some embodiments, the first key ID information in the first message is transmitted via an OSCORE protocol parameter, and the OSCORE protocol parameter included at least one of:
a KID context, a KID, or an ID context.

In some embodiments, the first key ID information is GBA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In some embodiments, the first key ID information is AKMA-related key ID information.

In an example, the AKMA-related key ID information is at least one of: 3GPP-AKMA, or an A-KID.

Embodiments of the disclosure construct the method for determining a key for AKMA and GBA scenarios. The UE provided the first key ID information to the first entity, to enable the first entity to determine the first key according to the first key ID information. The first key is obtained from the second entity according to the first key ID information, which improves the security of the OSCORE protocol and expands the application scenarios of OSCORE.

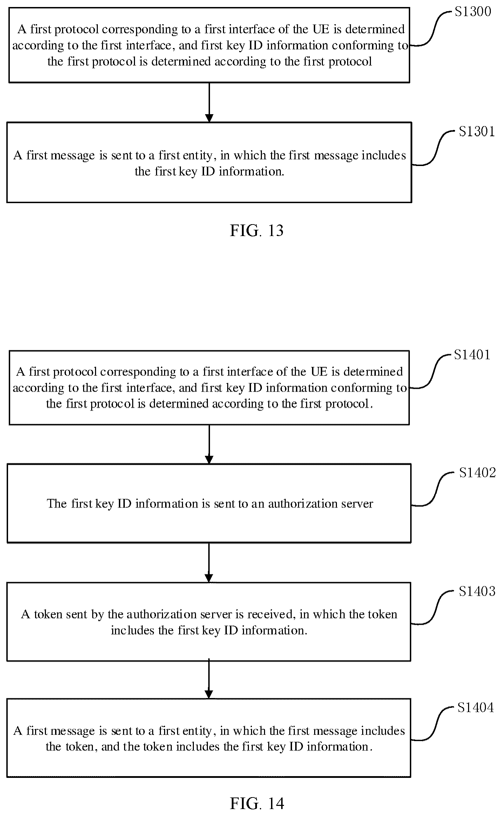

An embodiment of the disclosure provides a method for determining a key, which is executed by a UE. FIG. 13 is a flowchart of a method for determining a key according to an example embodiment. As shown in FIG. 13, the method includes S1300-S1301.

At S1300, a first protocol corresponding to a first interface of the UE is determined according to the first interface, and first key ID information conforming to the first protocol is determined according to the first protocol.

At S1301, a first message is sent to a first entity, in which the first message includes the first key ID information.

The content of S1301 is the same as the content of S1201, see S1201, and details are not described herein again.

According to the method for determining a key provided by the embodiments of the disclosure, the first key ID information conforming to the first protocol is determined according to the first protocol supported by the first interface of the UE. The first key ID information is then provided to the first entity, so that the first entity may determine the first key according to the first key ID information, and the first key is obtained from the second entity according to the first key ID information, which improves the security of determining the OSCORE-related master secret.

An embodiment of the disclosure provides a method for determining a key, which is executed by a UE. FIG. 14 is a flowchart of a method for determining a key according to an example embodiment. As shown in FIG. 14, the method includes S1401-S1404.

At S1401, a first protocol corresponding to a first interface of the UE is determined according to the first interface, and first key ID information conforming to the first protocol is determined according to the first protocol.

At S1402, the first key ID information is sent to an authorization server.

At S1403, a token sent by the authorization server is received, in which the token includes the first key ID information.

At S1404, a first message is sent to a first entity, in which the first message includes the token, and the token includes the first key ID information.

The content of S1404 is the same as the content of S1201, see S1201, and details are not described herein again.

According to the method for determining a key provided by the embodiments of the disclosure, the UE generates the token including the first key ID information via through the authorization server, and sends the first message to the first entity based on the token, which may further improve the security in the determining process of the OSCORE-related master secret.

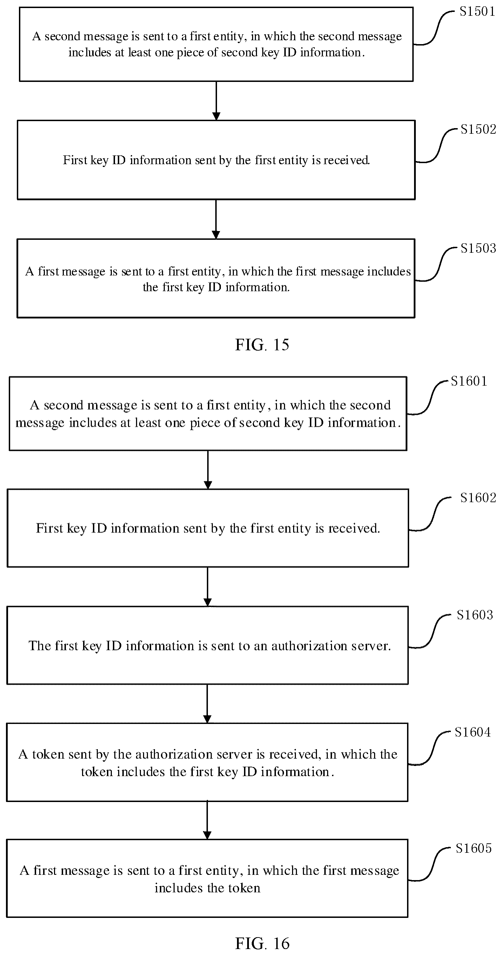

An embodiment of the disclosure provides a method for determining a key, which is executed by a UE. FIG. 15 is a flowchart of a method for determining a key according to an example embodiment. As shown in FIG. 15, the method includes S1501-S1503.

At S1501, a second message is sent to a first entity, in which the second message includes at least one piece of second key ID information.

In some embodiments, the second key ID information includes at least one of: at least one piece of GBA-related key ID information, or at least one piece of AKMA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In an example, the AKMA-related key ID information is at least one of: 3GPP-AKMA, or an A-KID.

In some embodiments, the second key ID information is key ID information determined by the UE according to a first interface of the UE and conforming to a first protocol corresponding to the first interface.

In an example, in a case where the UE determines that the first protocol supported by the first interface of the UE only includes the GBA protocol, the UE selects at least one piece of second key ID information from the GBA-related key ID information and sends the at least one piece of second key ID information to the first entity via the second message.

In an example, in a case where the UE determines that the first protocol supported by the first interface of the UE only includes the AKMA protocol, the UE selects at least one piece of second key ID information from the AKMA-related key ID information and sends the at least one piece of second key ID information to the first entity via the second message.

In an example, in a case where the UE determines that the first protocol supported by the first interface of the UE includes both the GBA protocol and the AKMA protocol, the UE may select at least one piece of second key ID information from the GBA-related key ID information and/or the AKMA-related key ID information and send the at least one piece of second key ID information to the first entity via the second message.

At S1502, first key ID information sent by the first entity is received.

In some embodiments, the first key ID information is key ID information determined by the first entity according to a second interface of the first entity and conforming to a second protocol corresponding to the second interface.

At S1503, a first message is sent to a first entity, in which the first message includes the first key ID information.

The content of S1503 is the same as the content of S1201, see S1201, and details are not described herein again.

According to the method for determining a key provided by the embodiments of the disclosure, the UE may determine the at least one piece of second key ID information according to the first protocol supported by the UE's own interface and send the at least one piece of second key ID information to the first entity. The first entity may, based on the second protocol supported by first entity's own interface, have a higher probability of selecting one from the received second key ID information as the first key ID information, thereby increasing the probability of successful negotiation.

An embodiment of the disclosure provides a method for determining a key, which is executed by a UE. FIG. 16 is a flowchart of a method for determining a key according to an example embodiment. As shown in FIG. 16, the method includes S1601-S1605.

At S1601, a second message is sent to a first entity, in which the second message includes at least one piece of second key ID information.

In some embodiments, the second key ID information includes at least one of: at least one piece of GBA-related key ID information, or at least one piece of AKMA-related key ID information.

In an example, the GBA-related key ID information is at least one of:
3GPP-bootstrapping, 3GPP-GBA, 3GPP-bootstrapping-UICC, 3GPP-GBA-UICC, 3GPP-bootstrapping-digest, 3GPP-GBA-digest, or a B-TID.

In an example, the AKMA-related key ID information is at least one of: 3GPP-AKMA, or an A-KID.

In some embodiments, the second key ID information is key ID information determined by the UE according to a first interface of the UE and conforming to a first protocol corresponding to the first interface.

In an example, in a case where the UE determines that the first protocol supported by the first interface of the UE only includes the GBA protocol, the UE selects at least one piece of second key ID information from the GBA-related key ID information and sends the at least one piece of second key ID information to the first entity via the second message.

In an example, in a case where the UE determines that the first protocol supported by the first interface of the UE only includes the AKMA protocol, the UE selects at least one piece of second key ID information from the AKMA-related key ID information and sends the at least one piece of second key ID information to the first entity via the second message.

In an example, in a case where the UE determines that the first protocol supported by the first interface of the UE includes both the GBA protocol and the AKMA protocol, the UE may select at least one piece of second key ID information from the GBA-related key ID information and/or the AKMA-related key ID information and send the at least one piece of second key ID information to the first entity via the second message.

At S1602, first key ID information sent by the first entity is received.

In some embodiments, the first key ID information is key ID information determined by the first entity according to a second interface of the first entity and conforming to a second protocol corresponding to the second interface.

At S1603, the first key ID information is sent to an authorization server.

At S1604, a token sent by the authorization server is received, in which the token includes the first key ID information.

At S1605, a first message is sent to a first entity, in which the first message includes the token, and the token includes the first key ID information.

According to the method for determining a key provided by the embodiments of the disclosure, the UE generates the token including the first key ID information via through the authorization server, and sends the first message to the first entity based on the token, which may further improve the security in the determining process of the OSCORE-related master secret.

Based on the same concept as the above method embodiments, embodiments of the disclosure also provide an electronic device, which may have the function of the first entity in the above method embodiments and be configured to execute the steps performed by the first entity provided in the above embodiments. This function may be implemented by hardware, or by software or hardware executing corresponding software. The hardware or software includes one or more modules corresponding to the above functions.

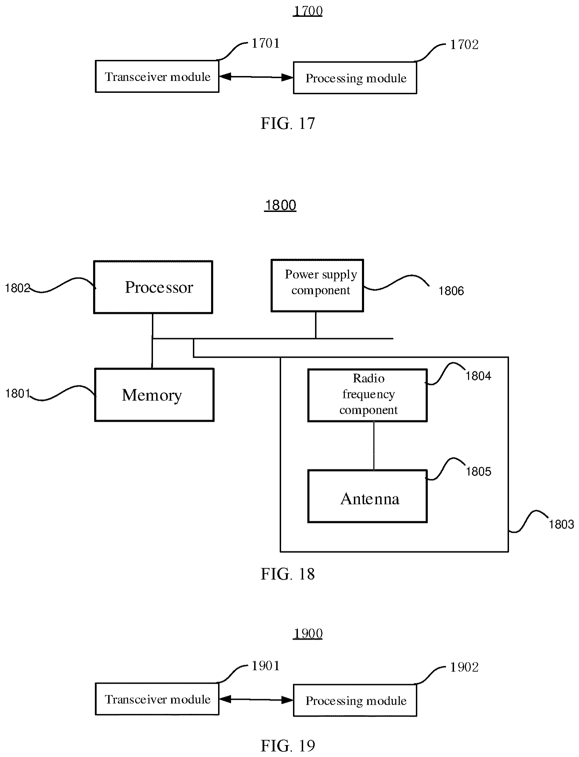

In an example, an electronic device 1700 as shown in FIG. 17 may serve as the first entity involved in the above method embodiments and execute the steps performed by the first entity in any one of the above method embodiments.

The electronic device 1700 includes a transceiver module 1701 and a processing module 1702.

The transceiver module 1701 is configured to receive a first message send by a UE, in which the first message includes first key ID information; and to determine a first key according to the first key ID information, in which the first key is obtained from a second entity according to the first key ID information, and the first key is a key corresponding to the first key ID information.

The processing module 1702 is configured to determine an OSCORE-related master based on the first key.

In some embodiments, the first message is an OSCORE message.

In some embodiments, the first key ID information in the first message is transmitted via an OSCORE protocol parameter, and the OSCORE protocol parameter includes at least one of:
a KID context, a KID, or an ID context.

In some embodiments, the transceiver module is further configured to:
receive a second message sent by the UE, in which the second message includes at least one piece of second key ID information;
select the first key ID information from the at least one piece of second key ID information; and send the first key ID information to the UE.

In some embodiments, the processing module is further configured to:
obtain the first key from the second entity according to the first key ID information.

In some embodiments, the second key ID information is key ID information determined by the UE according to a first interface of the UE and conforming to a first protocol corresponding to the first interface.

In some embodiments, the first key ID information is key ID information determined by the first entity according to a second interface of the first entity and conforming to a second protocol corresponding to the second interface.

In some embodiments, the first key ID information is GBA-related key ID information or AKMA-related key ID information.

In some embodiments, the second key ID information includes at least one of: at least one piece of GBA-related key ID information, or at least one piece of AKMA-related key ID information.

In some embodiments, the GBA-related key ID information includes at least one of: 3GPP-bootstrapping, 3GPP-GBA, 3GPP-bootstrapping-UICC, 3GPP-GBA-UICC, 3GPP-bootstrapping-digest, 3GPP-GBA-digest, or a B-TID; and/or
the AKMA-related key ID information includes at least one of: 3GPP-AKMA, or an A-KID.

In some embodiments, the first message includes a token, and the token includes the first key ID information.

In some embodiments, the token is generated by an authorization server according to the first key ID information.

In some embodiments, the first key ID information is key ID information determined by the UE according to a first interface of the UE and conforming to a first protocol corresponding to the first interface.

When the electronic device is a network device, its structure may also be as shown in FIG. 18. As shown in FIG. 18, the electronic device 1800 includes a memory 1801, a processor 1802, a transceiver component 1803, and a power supply component 1806. The memory 1801 is coupled with the processor 1802 and may be configured to store programs and data necessary for the electronic device 1800 to implement various functions. The processor 1802 is configured to support the electronic device 1800 in performing corresponding functions in the above-mentioned methods, and this function may be realized by calling the programs stored in the memory 1801. The transceiver component 1803 may be a wireless transceiver, which may be configured to support the electronic device 1800 in receiving signaling and/or data through a wireless air interface, as well as sending signaling and/or data. The transceiver component 1803 may also be called a transceiver unit or a communication unit. The transceiver component 1803 may include a radio frequency component 1804 and one or more antennas 1805, where the radio frequency component 1804 may be a remote radio unit (RRU), specifically configured for the transmission of radio frequency signals and the conversion between radio frequency signals and baseband signals, and the one or more antennas 1805 may specifically be configured for radiating and receiving radio frequency signals.

When the electronic device 1800 needs to send data, the processor 1802 may perform baseband processing on the data to be sent, then output a baseband signal to the radio unit. The radio unit performs radio frequency processing on the baseband signal and then sends the radio frequency signal in the form of electromagnetic waves via the antenna. When data is sent to the electronic device 1800, the radio unit receives the radio frequency signal via the antenna, converts the radio frequency signal into a baseband signal, and outputs the baseband signal to the processor 1802. The processor 1802 converts the baseband signal into data and processes the data.

An embodiment of the disclosure provides a computer-readable storage medium, and instructions are stored in the computer-readable storage medium. When the instructions are invoked and executed on a computer, the computer is caused to execute the above-mentioned method.

Based on the same concept as the above method embodiments, embodiments of the disclosure also provide an electronic device, which may have the function of the UE in the above method embodiments and be configured to execute the steps performed by the UE provided in the above embodiments. This function may be implemented by hardware, or by software or hardware executing corresponding software. The hardware or software includes one or more modules corresponding to the above functions.

In some embodiments, a electronic device 1900 as shown in FIG. 19 may serve as a UE involved in the above method embodiments and execute the steps performed by the UE in any one of the above method embodiments.

The electronic device 1900 includes a transceiver module 1901 and a processing module 1902.

The transceiver module 1901 is configured to send a first message to a first entity, in which the first message includes first key ID information configured for the first entity to determine a first key according to the first key ID information and to determine an OSCORE-related master key based on the first key, and in which the first key is obtained from a second entity according to the first key ID information, and the first key is a key corresponding to the first key ID information.

In some embodiments, the first message is an OSCORE message.

In some embodiments, the first key ID information in the first message is transmitted via an OSCORE protocol parameter, and the OSCORE protocol parameter includes at least one of:
a KID context, a KID, or an ID context.

In some embodiments, the processing module 1902 is further configured to:
determine, according to a first interface of the UE, a first protocol corresponding to the first interface; and determine, according to the first protocol, the first key ID information conforming to the first protocol.

In some embodiments, the transceiver module is further configured to:
send a second message to the first entity, in which the second message includes at least one piece of second key ID information; and receive the first key ID information sent by the first entity.

In some embodiments, the second key ID information is key ID information determined by the UE according to a first interface of the UE and conforming to a first protocol corresponding to the first interface.

In some embodiments, the first key ID information is key ID information determined by the first entity according to a second interface of the first entity and conforming to a second protocol corresponding to the second interface.

In some embodiments, the first key ID information is GBA-related key ID information or AKMA-related key ID information.

In some embodiments, the second key ID information includes at least one of: at least one piece of GBA-related key ID information, or at least one piece of AKMA-related key ID information.

In some embodiments, the GBA-related key ID information includes at least one of: 3GPP-bootstrapping, 3GPP-GBA, 3GPP-bootstrapping-UICC, 3GPP-GBA-UICC, 3GPP-bootstrapping-digest, 3GPP-GBA-digest, or a B-TID; and/or
the AKMA-related key ID information includes at least one of: 3GPP-AKMA, or an A-KID.

In some embodiments, the transceiver module is further configured to:
send the first key ID information to an authorization server; and receive a token sent by the authorization server, in which the token includes the first key ID information.

In some embodiments, the first message includes a token, and the token includes the first key ID information.

In some embodiments, the processing module 1902 is further configured to: determine, according to a first interface of the UE, a first protocol corresponding to the first interface; and determine, according to the first protocol, the first key ID information conforming to the first protocol.

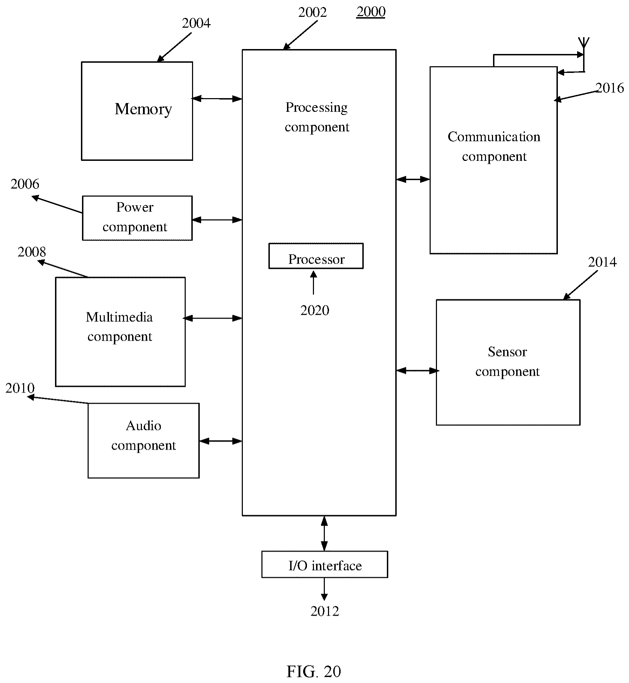

When the electronic device is a UE, its structure may also be as shown in FIG. 20. The electronic device 2000 may be a mobile phone, a computer, a digital broadcasting terminal, a message transceiver device, a game console, a tablet device, a medical device, a fitness device or a personal digital assistant.

Referring to FIG. 20, the electronic device 2000 may include one or more of the following components: a processing component 2002, a memory 2004, a power component 2006, a multimedia component 2008, an audio component 2010, an input/output (I/O) interface 2012, a sensor component 2014, and a communication component 2016.

The processing component 2002 typically controls overall operations of the electronic device 2000, such as the operations associated with display, telephone calls, data communications, camera operations, and recording operations. The processing component 2002 may include one or more processors 2020 to perform all or part of the steps in the above described methods. Moreover, the processing component 2002 may include one or more modules which facilitate the interaction between the processing component 2002 and other components. For example, the processing component 2002 may include a multimedia module to facilitate the interaction between the multimedia component 2008 and the processing component 2002.

The memory 2004 is configured to store various types of data to support the operation of the electronic device 2000. Examples of such data include instructions for any applications or methods operated on the electronic device 2000, contact data, phonebook data, messages, pictures, video, etc. The memory 2004 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 2006 provides power to various components of the electronic device 2000. The power component 2006 may include a power management system, one or more power sources, and any other components associated with the generation, management, and distribution of power in the electronic device 2000.

The multimedia component 2008 includes a touch screen providing an output interface between the electronic device 2000 and the user. In some embodiments, the screen may include a liquid crystal display (LCD) and a touch panel (TP). The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 2008 includes a front-facing camera and/or a rear-facing camera. When the electronic device 2000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 2010 is configured to output and/or input audio signals. For example, the audio component 2010 includes a microphone (MIC) configured to receive an external audio signal when the electronic device 2000 is in an operation mode, such as a call mode, a recording mode, and a voice recognition mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules, such as a keyboard, a click wheel, buttons, and the like. The buttons may include, but are not limited to, a home button, a volume button, a starting button, and a locking button.

The sensor component 2014 includes one or more sensors to provide status assessments of various aspects of the electronic device 2000. For instance, the sensor component 2014 may detect an open/closed status of the electronic device 2000, relative positioning of components, e.g., the display and the keypad, of the electronic device 2000, a change in position of the electronic device 2000 or a component of the electronic device 2000, a presence or absence of user contact with the electronic device 2000, an orientation or an acceleration/deceleration of the electronic device 2000, and a change in temperature of the electronic device 2000. The sensor component 2014 may include a proximity sensor configured to detect the presence of nearby objects without any physical contact. The sensor component 2014 may also include a light sensor, such as a complementary metal oxide semiconductor (CMOS) or charge-coupled device (CCD) image sensor, for use in imaging applications. In some embodiments, the sensor component 2014 may also include an accelerometer sensor, a gyroscope sensor, a magnetic sensor, a pressure sensor, or a temperature sensor.

The communication component 2016 is configured to facilitate communication, wired or wirelessly, between the electronic device 2000 and other devices. The electronic device 2000 can access a wireless network based on a communication standard, such as Wi-Fi, 2G or 3G, or a combination thereof. In an exemplary embodiment, the communication component 2016 receives a broadcast signal or broadcast associated information from an external broadcast management system via a broadcast channel. In an exemplary embodiment, the communication component 2016 further includes a near field communication (NFC) module to facilitate short-range communication. For example, the NFC module may be implemented based on a radio frequency identification (RFID) technology, an infrared data association (IrDA) technology, an ultra-wide band (UWB) technology, a blue tooth (BT) technology, and other technologies.

In some exemplary embodiments, the electronic device 2000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In an embodiment, there is also provided a non-transitory computer-readable storage medium containing instructions, such as the memory 2004 including instructions, where the above-mentioned instructions may be executed by the processor 2020 of the electronic device 2000 to implement the above-mentioned method. For example, the storage medium may be a read-only memory (ROM), a random access memory (RAM), compact disc-ROM (CD-ROM), a magnetic tape, a floppy disk, an optical data storage device, etc.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as illustrative only, with a true scope and spirit of the disclosure being indicated by the following claims.

It should be understood that the embodiments of the disclosure are not limited to the precise structures that have been described above and shown in the accompanying drawings, and various modifications and changes may be made without departing from their scope. The scope of the embodiments of the disclosure is limited only by the appended claims.

### Industrial Applicability

Embodiments of the disclosure construct a method for determining or assisting in determining a key for OSCORE scenarios. The first entity may determine the first key according to the first key ID information sent by the UE. The first key is obtained from the second entity according to the first key ID information, so as to use the first key as the OSCORE master secret, which improves a security of the OSCORE protocol and expands application scenarios of OSCORE.

## Claims

1. A method for determining a key, performed by a first entity, comprising:
receiving a first message sent by a user equipment (UE), wherein the first message comprises first key identifier (ID) information;
determining a first key according to the first key ID information, wherein the first key is obtained from a second entity according to the first key ID information, and the first key is a key corresponding to the first key ID information; and
determining an object security for constrained RESTful environments (OSCORE)-related master secret based on the first key.

2. The method according to claim 1, wherein the first message is an OSCORE message.

3. The method according to claim 2, wherein the first key ID information in the first message is transmitted via an OSCORE protocol parameter, and the OSCORE protocol parameter comprises at least one of:
a key ID (KID) context, a KID, or an ID context.

4. The method according to any one of claims 1 to 3, further comprising:
receiving a second message sent by the UE, wherein the second message comprises at least one piece of second key ID information;
selecting the first key ID information from the at least one piece of second key ID information;
and
sending the first key ID information to the UE.

5. The method according to any one of claims 1 to 3, further comprising:
obtaining the first key from the second entity according to the first key ID information.

6. The method according to claim 4, wherein the second key ID information is key ID information determined by the UE according to a first interface of the UE and conforming to a first protocol corresponding to the first interface.

7. The method according to claim 4, wherein the first key ID information is key ID information determined by the first entity according to a second interface of the first entity and conforming to a second protocol corresponding to the second interface.

8. The method according to any one of claims 1 to 7, wherein the first key ID information is generic bootstrapping architecture (GBA)-related key ID information or authentication and key management for applications (AKMA)-related key ID information.

9. The method according to any one of claims 3 to 7, wherein the second key ID information comprises at least one of: at least one piece of GBA-related key ID information, or at least one piece of AKMA-related key ID information.

10. The method according to claim 8 or 9, wherein the GBA-related key ID information comprises at least one of: 3rd generation partnership project (3GPP)-bootstrapping, 3GPP-GBA, 3GPP-bootstrapping-universal integrated circuit card (UICC), 3GPP-GBA-UICC, 3GPP-bootstrapping-digest, 3GPP-GBA-digest, or a bootstrapping-transaction ID (B-TID); and/or
wherein the AKMA-related key ID information comprises at least one of: 3GPP-AKMA, or an application-KID (A-KID).

11. The method according to any one of claims 1 to 10, wherein the first message comprises a token, and the token comprises the first key ID information.

12. The method according to claim 11, wherein the token is generated by an authorization server according to the first key ID information.

13. The method according to claim 1, wherein the first key ID information is key ID information determined by the UE according to a first interface of the UE and conforming to a first protocol corresponding to the first interface.

14. A method for determining a key, performed by a UE, comprising:
sending a first message to a first entity, wherein the first message comprises first key ID information configured for the first entity to determine a first key according to the first key ID information and to determine an OSCORE-related master secret based on the first key, and wherein the first key is obtained from a second entity according to the first key ID information, and the first key is a key corresponding to the first key ID information.

15. The method according to claim 14, wherein the first message is an OSCORE message.

16. The method according to claim 15, wherein the first key ID information in the first message is transmitted via an OSCORE protocol parameter, and the OSCORE protocol parameter comprises at least one of:
a KID context, a KID, or an ID context.

17. The method according to any one of claims 14 to 16, further comprising:
determining, according to a first interface of the UE, a first protocol corresponding to the first interface; and
determining, according to the first protocol, the first key ID information conforming to the first protocol.

18. The method according to any one of claims 14 to 17, further comprising:
sending a second message to the first entity, wherein the second message comprises at least one piece of second key ID information; and
receiving the first key ID information sent by the first entity.

19. The method according to claim 18, wherein the second key ID information is key ID information determined by the UE according to a first interface of the UE and conforming to a first protocol corresponding to the first interface.

20. The method according to claim 18, wherein the first key ID information is key ID information determined by the first entity according to a second interface of the first entity and conforming to a second protocol corresponding to the second interface.

21. The method according to any one of claims 14-20, wherein the first key ID information is GBA-related key ID information or AKMA-related key ID information.

22. The method according to any one of claims 18-21, wherein the second key ID information comprises at least one of: at least one piece of GBA-related key ID information, or at least one piece of AKMA-related key ID information.

23. The method according to claim 21 or 22, wherein the GBA-related key ID information comprises at least one of: 3GPP-bootstrapping, 3GPP-GBA, 3GPP-bootstrapping-UICC, 3GPP-GBA-UICC, 3GPP-bootstrapping-digest, 3GPP-GBA-digest, or a B-TID; and/or
wherein the AKMA-related key ID information comprises at least one of: 3GPP-AKMA, or an A-KID.

24. The method according to any one of claims 14 to 23, further comprising:
sending the first key ID information to an authorization server; and
receiving a token sent by the authorization server, wherein the token comprises the first key ID information.

25. The method according to claim 24, wherein the first message comprises the token, and the token comprises the first key ID information.

26. The method according to claim 15, further comprising:
determining, according to a first interface of the UE, a first protocol corresponding to the first interface; and
determining, according to the first protocol, the first key ID information conforming to the first protocol.

27. An apparatus for determining a key, comprising:
a transceiver module, configured to receive a first message send by a UE, wherein the first message comprises first key ID information; and to determine a first key according to the first key ID information, wherein the first key is obtained from a second entity according to the first key ID information, and the first key is a key corresponding to the first key ID information; and
a processing module, configured to determine an OSCORE-related master based on the first key.

28. An apparatus for determining a key, comprising:
a transceiver module, configured to send a first message to a first entity, wherein the first message comprises first key ID information configured for the first entity to determine a first key according to the first key ID information and to determine an OSCORE-related master key based on the first key, and wherein the first key is obtained from a second entity according to the first key ID information, and the first key is a key corresponding to the first key ID information.

29. An electronic device, comprising:
a memory configured to store a computer program; and
a processor configured to execute the computer program to implement the method according to any one of claims 1 to 13.

30. An electronic device, comprising:
a memory configured to store a computer program; and
a processor configured to execute the computer program to implement the method according to any one of claims 14 to 26.

31. A computer-readable storage medium for storing instructions that, when invoked and executed on a computer, cause the computer to implement the method according to any one of claims 1 to 13.

32. A computer-readable storage medium for storing instructions that, when invoked and executed on a computer, cause the computer to implement the method according to any one of claims 14 to 26.
